(19) Europäisches Patentamt
European Patent Office
Office européen des brevets

(11) EP 1 010 723 A1

# (12) EUROPÄISCHE PATENTANMELDUNG

(43) Veröffentlichungstag:
**21.06.2000 Patentblatt 2000/25**

(51) Int. Cl.[7]: **C08K 5/50**, C08K 5/524, C08K 5/54, C08L 21/00

(21) Anmeldenummer: **99124624.0**

(22) Anmeldetag: **10.12.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **19.12.1998 DE 19858863**

(71) Anmelder:
**Degussa-Hüls Aktiengesellschaft**
**60287 Frankfurt am Main (DE)**

(72) Erfinder:
- **Freund, Burkhard, Dr.**
  **50374 Erfstadt (DE)**
- **Luginsland, Hans-Detlef, Dr.**
  **50968 Köln (DE)**

## (54) Organosilanpolysulfanen enthaltende Gummimischungen

(57) Die Erfindung betrifft die in-situ Entschwefelung von Organosilanpolysulfanen während der Herstellung von Kautschukmischungen durch den Zusatz von insbesondere Phosphinen oder Phosphiten.

EP 1 010 723 A1

## Beschreibung

Die vorliegende Erfindung betrifft Organosilanpolysulfane enthaltende Gummimischungen.

Es ist bekannt, Organosilanpolysulfane als Haftvermittler oder Verstärkungsadditiv in oxidisch gefüllten Kautschukmischungen, wie zum Beispiel Laufflächen und andere Teile von Autoreifen, einzusetzen (DE 2 141 159, DE 2 212 239, US 3 978 103, US 4 048 206). Derartige Organosilanpolysulfane, wie zum Beispiel Bis-(3-[Triethoxysilyl]-propyl)tetrasulfan (TESPT), bestehen im allgemeinen aus einem Polysulfangemisch, wobei die Sulfankettenlängen ($S_x$) im allgemeinen in einem Bereich von 2 bis 10 liegen.

Es ist weiterhin bekannt, daß bei dem Einsatz derartiger Haftvermittler in oxidisch gefüllten Kautschukmischungen Verarbeitungstemperaturen oberhalb von 130°C eingehalten werden müssen, um die Reaktion zwischen der Kieselsäure und dem Organosilan zu ermöglichen. Die Mischungsplastizität wird dabei abgesenkt. Mit steigender Mischungstemperatur wird die Reaktion der Organosilane mit der Kieselsäure und der Austrieb des freigesetzten Alkohols beschleunigt.

Weiterhin ist bekannt, daß die hauptsächlich verwendeten Organosilanpolysulfane, wie das Bis-(3-[Triethoxysilyl]-propyl)tetrasulfan, einer besonderen Sorgfalt bei der Verarbeitung im Kautschuk bedürfen, um eine Vorvulkanisation bei der Mischung der Komponenten zu vermeiden. Insbesondere die reaktiven längerkettigen Polysulfane mit $S_x$>4 neigen bei Temperaturen oberhalb 140°C zur unerwünschten Vernetzungsreaktion mit dem Kautschuk. Dies macht sich unter anderem in einer Erhöhung der Mischungsplastizität bemerkbar (Görl, Münzenberg, ACS-Meeting Rubber Division, Anaheim, California/USA, May 1997, 38).

Es ist weiterhin bekannt Organosilane mit kürzeren Polysulfanketten zu verwenden(WO-A 97/48264, D-A 197 02 046). Die bekannten Organosilane mit kürzeren Polysulfanketten können durch die Umsetzung (Entschwefelung durch Nukleophile) von längerkettigen Organosilanpolysulfanen mit dreiwertigen Phosphorverbindungen, Sulfiten oder Cyaniden (D 195 41 404 und EP-A 845 472) erhalten werden. Die Herstellung dieser Organosilanpolysulfane bedarf jedoch mindestens eines zusätzlichen Verfahrensschritts. Sie ist kompliziert und teuer.

Gegenstand der Erfindung sind Kautschukmischungen, welche mindestens ein Organosilan und mindestens ein Reagenz zur Entschwefelung aus den Verbindungsklassen dreiwertiger Phosphorverbindungen enthalten. Erfindungsgemäß wurde gefunden, daß bei der Herstellung der Mischung die Neigung zur Vorvulkanisation bei der Verwendung von längerkettigen Organosilanpolysulfanen in Kautschukmischungen, durch die direkte Zugabe dreiwertigen Phosphorverbindungen, Sulfiten oder Cyaniden, die befähigt sind, den Anteil an längerkettigen Polysulfanen durch eine Entschwefelungsreaktion zu reduzieren, weitgehend vermieden werden kann.

Als Organosilanpolysulfane können bekannte Organosilanpolysulfane eingesetzt werden. Insbesondere können Organosilanpolysulfane, die der Formel I entsprechen, eingesetzt werden.

$$(R^1 R^2 R^3 SIR^4)_2Sx \qquad I$$

wobei

$R^1$, $R^2$, $R^3$ gleich oder unabhängig von einander sein können:

H, ($C_1$-$C_4$) Alkyl,$C_2$-$C_4$ Alkoxy oder Halogen, wobei Halogen Cl, Br sein kann; wobei bevorzugt $R^1$ = $R^2$ = $R^3$ = Methoxy- oder Ethoxy sein kann.

$R^4$ kann ($C_1$-$C_6$) linear oder verzweigtes Alkyliden sein;

X = 2 bis 10

Zur Entschwefelung der Organosilanpolysulfane in der Mischung eignen sich besonders die folgenden Nukleophile:

Phosphine der allgemeine Struktur: $P(R^1)_3$ und $P(NR^2R^3)_3$, mit unabhängig gewählten $R^1$, $R^2$, $R^3$ = H, Alkyl, Aryl, insbesondere $R^1$ = Phenyl

Phosphite der allgemeinen Struktur: $P(OR^4)_3$ und $HOP(OR^4)_2$ mit $R^4$ = Alkyl, Aryl
und Dithiophosphite der allgemeinen Struktur:

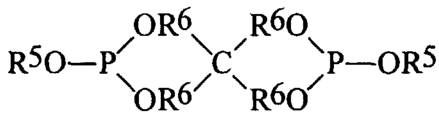

II

, mit unabhängig gewählten $R^5$, $R^6$ = Alkyl, Aryl

Kautschukmischungen, die die erfindungsgemäße Verwendung einer Kombination aus einem Organosilanpolysulfan und einem Nukleophil zur Entschwefelung enthalten, und die nach einem Vulkanisationsschritt resultierenden Formkörper, insbesondere Luftreifen oder Reifenlaufflächen, besitzen neben der höheren Scorchsicherheit überraschenderweise auch einen höheren Spannungswert 300%/100%, welcher eine höhere Kopplungseffektivität des Haftvermittlers anzeigt. Dies spiegelt sich auch in einem niedrigeren tan $\delta$ (60°C) Wert, was mit einem niedrigeren Rollwiderstand korreliert, wider.

Gemäß einer Ausführungsform der Erfindung können die Kautschukmischungen, ein Organosilanpolysulfan in Mengen von 0,1 bis 15 Gew-%, besonders bevorzugt 5 bis 10 Gew.-%, bezogen auf die Menge des eingesetzten Füllstoffs, und mindestens ein Reagenz zur Entschwefelung, welches befähigt ist den Anteil an längerkettigen Polysulfanen durch eine Entschwefelungsreaktion zu reduzieren, in Mengen von 5 bis 80 Gew-%, besonders bevorzugt 10 bis 40 Gew.-%, bezogen auf die Menge des eingesetzten Organosilanpolysulfans, enthalten.

In einer bevorzugten Ausführungsform der Erfindung können die Mischungen einen Synthesekautschuk und eine Kieselsäure als Füllstoff enthalten. Die erfindungsgemäßen Kautschuk-Mischungen können hergestellt werden, indem Kautschuk mindestens ein Füllstoff, ein Organosilanpolysulfan und ein Reagenz zur Entschwefelung miteinander vermischt werden.

Die Zugabe der Organosilane, der Nukleophile zum Entschwefeln derselben, sowie die Zugabe der Füllstoffe erfolgt bevorzugt zusammen in einem thermomechanischen Mischschritt bei Massetemperaturen von 80 bis 200 °C, besonders bevorzugt 140 bis 180°C.

Die Zugabe der Nukleophile kann bevorzugt zur Beginn der Mischungsherstellung erfolgen, um die erfindungsgemäß erhöhte Thermostabilität der Mischung bereits zu einem möglichst frühen Stadium der Mischungsherstellung zu gewährleisten.

Als Füllstoffe können für die erfindungsgemäßen Kautschukmischungenverwendet werden:

- Ruße, die nach dem Flammruß-, Furnace- oder Gasruß-Verfahren hergestellt sein können und BET-Oberflächen von 20 bis 200 $m^2/g$ besitzen.

- hochdispergierbare Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 $m^2/g$ (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn- und Titanoxiden vorliegen.

- Synthetische Silikate, wie Aluminiumsilikat, Erdalkalisilikate wie Magnesiumsilikat oder - Calciumsilikat, mit BET-Oberflächen von 20 bis 400 $m^2/g$ und Primärteilchendurchmessern von 10 bis 400 nm.

- Aluminiumoxide mit einem Anteil an -OH Funktionalitäten.

- Natürliche Silikate, wie Kaolin und andere natürlich vorkommende Kieselsäuren.

- Glasfasern und Glasfaserprodukte (Matten, Stränge) oder Mikroglaskugeln.

Bevorzugt können Ruße mit BET-Oberflächen von 20 bis 400 $m^2/g$ oder hochdisperse Kieselsäuren, hergestellt durch Fällung von Lösungen von Silikaten, mit BET-Oberflächen von 20 bis 400 $m^2/g$ in Mengen von 5 bis 150 Gew.-Teilen, jeweils bezogen auf 100 Teile Kautschuk, eingesetzt werden.

Die genannten Füllstoffe können allein oder im Gemisch eingesetzt werden. In einer besonders bevorzugten Ausführung des Verfahrens können 10 bis 150 Gew.-Teile helle Füllstoffe, gegebenenfalls zusammen mit 0 bis 100 Gew.-Teilen Ruß, sowie 0,1 bis 15 Gew.-Teile, bevorzugt 5 bis 10 Gew.-Teile eines Organosilanpolysulfans, jeweils bezogen auf 100 Gew.-Teile des eingesetzten Füllstoffs, und mindestens ein Nukleophil, welches befähigt ist, den Anteil an längerkettigen Polysulfanen durch eine Entschwefelungsreaktion zu reduzieren, in Mengen von 5 bis 80 Gew-%, besonders bevorzugt 10 bis 40 Gew.-%, bezogen auf die Menge des eingesetzten Organosilanpolysulfans, zur Herstellung der Mischungen eingesetzt werden.

Das Organosilan kann pur oder in Kombination mit einem Träger, bevorzugt Ruß, verwendet werden.

Die Zugabe des Nukleophils zur Mischung kann direkt in Substanz oder aber als Abmischung mit einem anderen Mischungsbestandtteil, bevorzugt den Silan oder den Kautschukhilfsmitteln, erfolgen.

Die Nukleophile, das Organosilan und/oder das Kautschukhilfsmittel können pur oder in Abmischung/Kombination mit einem Träger, bevorzugt Ruß, verwendet werden.

Für die Herstellung erfindungsgemäßer Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen u. a.

- Polybutadien (BR)
- Polyisopren (IR)
- Styrol/Butadien-Copolymerisate mit Styrolgehalten von 1 bis 60, vorzugsweise 5 bis 50 Gew.-% (SBR)
- Isobutylen/Isopren-Copolymerisate (IIR)
- Butadien/Acrylnitril-Copolymere mit Acrylnitrilgehalten von 5 bis 60, vorzugsweise 10 bis 50 Gew.-% (NBR)
- teilhydrierter oder vollständig hydrierter NBR-Kautschuk (HNBR)
- Ethylen/Propylen/Dien-Copolymerisate (EPDM)

sowie Mischungen dieser Kautschuke. Für die Herstellung von Kfz-Reifen können insbesondere anionisch polymerisierte L-SBR-Kautschuke mit einer Glastemperatur oberhalb von -50 °C sowie deren Mischungen mit Dienkautschuken eingesetzt werden.

Die erfindungsgemäßen Kautschukvulkanisate können weitere Kautschukhilfsstoffe, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Wachse, Streckmittel, organische Säuren, Verzögerer, Metalloxide sowie Aktivatoren, wie Triethanolamin, Polyethylenglykol, Hexantriol enthalten.

Die Kautschukhilfsmittel können in üblichen Mengen, die sich unter anderem nach dem Verwendungszweck richten, eingesetzt werden. Übliche Mengenkönnen zum Beispiel Mengen von 0,1 bis 50 Gew.-%, bezogen auf Kautschuk, sein. Die Organosilanpolysulfane können allein als Vernetzer dienen. In der Regel empfiehlt sich die Zugabe von weiteren Vernetzern. Als weitere bekannte Vernetzer können Schwefel oder Peroxide eingesetzt werden. Die erfindungsgemäßen Kautschukmischungen können darüber hinaus Vulkanisationsbeschleuniger enthalten. Beispiele für geeignete Vulkanisationsbeschleuniger sind Mercaptobenzthiazole, Sulfenamide, Guanidine, Thiurame, Dithiocarbamate, Thioharnstoffe und Thiocarbonate. Die Vulkanisationsbeschleuniger und Schwefel oder Peroxide werden in Mengen von 0,1 bis 10 Gew.-%, bevorzugt 0.1 bis 5 Gew.-%, bezogen auf Kautschuk, eingesetzt.

Die Vulkanisation der erfindungsgemäßen Kautschukmischungen kann bei Temperaturen von 80 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln, den Organosilanen und den erfindungsgemäßen Nukleophilen kann in üblichen Mischaggregaten, wie Walzen, Innenmischern und Mischextrudern, durchgeführt werden. Die erfindungsgemäßen Kautschukvulkanisate eignen sich zur Herstellung von Formkörpern, z.B. für die Herstellung von Luftreiten, Reifenlaufflächen, Kabelmänteln, Schläuchen, Treibriemen, Förderbändern, Walzenbelägen, Reifen, Schuhsohlen, Dichtungsringen und Dämpfungselementen.

## <u>Beispiele</u>

Anhand der Beispiele 2 und 3 werden die Vorteile bei der erfindungsgemäße Verwendung einer Kombinatiom aus einem Organosilanpolysulfid und einem Nukleophil zum Entschwefeln gegenüber dem Stand der Technik (Vergleichsbeispiele 1) deutlich.

### Allgemeine Durchführungsvorschrift

Die für die Kautschukmischungen verwendete Rezeptur ist in Tabelle 1 angegeben. Dabei bedeutet die Einheit phr Gewichtsanteile, bezogen auf 100 Teile des eingesetzten Rohkautschuks.

Tabelle 1

| Substanz | Menge [phr] |
|---|---|
| 1. Stufe | |
| Buna VSL 5025-1 | 96.0 |
| Buna CB 24 | 30.0 |
| Ultrasil VN3 | 80.0 |
| ZnO | 3.0 |
| Stearinsäure | 2.0 |
| Naftolene ZD | 10.0 |
| Vulkanox 4020 | 1.5 |
| Proteotor G35P | 1.0 |
| TESPT | 6.4 |
| Triphenylphosphin | 0 bis 4 |
| 2. Stufe | |
| Batch Stufe 1 | |
| 3. Stufe | |
| Batch Stufe 2 | |
| Vulkacit D | 2.0 |
| Vulkacit CZ | 1.5 |
| Schwefel | 1.5 |

Bei dem Polymer VSL 5025-1 handelt es sich um ein in Lösung polymerisiertes SBR-Copolymer der Bayer AG mit einem Styrolgehalt von 25 Gew.-% und einem Butadiengehalt von 75 Gew.-%. Von dem Butadien sind 73 % 1,2, 10 % cis 1,4 und 17 % trans 1,4 verknüpft. Das Copolymer enthält 37,5 phr Öl und weist eine Mooney-Viskosität (ML 1+4/100°C) von 50 ±4 auf.

Bei dem Polymer Buna CB 24 handelt es sich um ein cis 1,4 Polybutadien (Neodymtyp) der Bayer AG mit cis 1,4-Gehalt von 97 %, einem trans 1,4-Gehalt von 2 %, einem 1,2-Gehalt von 1 % und einer Mooney-Viskosität von 44 ±5.

Die Kieselsäure VN3 der Degussa AG besitzt eine BET-Oberfläche von 175 $m^2/g$.

Bis-(3-[Triethoxysilyl]-propyl)tetrasulfan (TESPT) wird unter dem Handelsnamen Si 69 von der Degussa AG vertrieben und besitzt eine durchschnittlich Sulfankettenlänge von 4 sowie einen Polysultananteil S(x>4) >25%.

Triphenylphosphin gemäß den Beispielen 2 und 3 ist von der Firma Merk bezogen worden.

Als aromatisches Öl wird Naftolen ZD der Chemetall verwendet. Bei Vulkanox 4020 handelt es sich um PPD der Bayer AG. Protektor G35P ist ein Ozonschutzwachs der HB-Fuller GmbH. Vulkacit D (DPG) und Vulkacit CZ (CBS) sind Handelsprodukte der Bayer AG.

Die Kautschukmischung wird dreistufig in einem Innenmischer entsprechend Tabelle 2 hergestellt:

**Tabelle 2:**

| Stufe 1 | |
|---|---|
| Einstellungen | |
| Mischaggregat | Werner & Pfleiderer E-Typ |
| Friktion | 1:1,11 |
| Drehzahl | 70 $min^{-1}$ |
| Stempeldruck | 5.5 bar |
| Leervolumen | 1.6 L |
| Füllgrad | 0.55 |
| Durchflußtemp. | 80 °C |
| Mischvorgang | |
| 0 bis 1 min | Buna VSL 5025-1 + Buna CB 24 |
| 1 bis 3 min | 1/2 Ultrasil VN3, ZnO, Stearinsäure, Naftolen ZD, Silan, ggf. Nukleophil |
| 3 bis 4 min | 1/2 Ultrasil VN3, Vulkanox 4020, Protector G35P |
| 4 min | säubern |
| 4 bis 5 min | mischen |
| 5 min | säubern |
| 5 bis 6 min | mischen und ausfahren |
| Batch-Temp. | 140-150°C |
| Lagerung | 24 h bei Raumtemperatur |

| Stufe 2 | |
|---|---|
| Einstellungen | |
| Mischaggregat | wie in Stufe 1 bis auf: |
| Drehzahl | 80 $min^{-1}$ |
| Füllgrad | 0.53 |
| Durchflußtemp. | 80 °C |
| Mischvorgang | |
| 0 bis 2 min | Batch Stufe 1 aufbrechen |
| 2 bis 6 min | Batchtemperatur 150°C durch Drehzahlvariation halten |
| 6 min | ausfahren |
| Batch-Temp. | 150-155°C |
| Lagerung | 4 h bei Raumtemperatur |

| Stufe 3 | |
|---|---|
| Einstellungen | |
| Mischaggregat | wie in Stufe 1 bis auf |
| Drehzahl | 40 $min^{-1}$ |
| Füllgrad | 0.51 |
| Durchflußtemp. | 50 °C |
| Mischvorgang | |
| 0 bis 2 min | Batch Stufe 2 + Vulkacit CZ + Vulkazit D + Schwefel |
| 2 min | ausfahren und auf Labormischwalzwerk Fell bilden<br>(Durchmesser 200 mm, Länge 450 mm,<br>Durchflußtemperatur 50°C)<br><br>Homogenisieren:<br>3* links, 3* rechts einschneiden und umklappen sowie<br>8* bei engem Walzenspalt (1 mm) und<br>3* bei weitem Walzenspalt (3,5 mm) stürzen und<br>anschließend ein Fell ausziehen |
| Batch-Temp. | 85-95°C |

Das allgemeine Verfahren zur Herstellung von Kautschukmischungen und deren Vulkanisate ist in dem folgendem Buch beschrieben: "Rubber Technology Handbook", W. Hofmann, Hanser Verlag 1994.

Die Vulkanisationszeit für die Prüfkörper beträgt 60 Minuten bei 165°C.

Die gummitechnische Prüfung erfolgt gemäß den in Tabelle 3 angegebenen Prüfmethoden.

Tabelle 3

| Physikalische Testung | Norm/ Bedingungen |
|---|---|
| ML 1+4, 100°C | DIN 53523/3, ISO 667 |
| Vulkameterprüfung, 165°C | DIN 53529/3, ISO 6502 |
| Zugversuch am Ring, 23°C<br>Zugfestigkeit<br>Spannungswerte<br>Bruchdehnung | DIN 53504, ISO 37 |
| Shore-A-Härte, 23°C | DIN 53 505 |
| Viskoelastische Eigenschaften, 0 und 60°C, 16 Hz, 50 N Vorkraft und 25 N Amplitudenkraft<br>Komplexer Modul E*,<br>Verlustfaktor tan δ | DIN 53 513, ISO 2856 |
| DIN-Abrieb, 10 N Kraft | DIN 53 516 |
| Dispersion | ISO/DIS 11345 |

**Beispiele 1, 2 und 3: Triphenylphosphin als Nukleophil**

Die Durchführung der Beispiele 1 (Vergleichsbeispiel), 2 und 3 erfolgt gemäß der Allgemeinen Durchführungsvorschrift, wobei in der Mischung aus Vergleichsbeispiel 1 kein Triphenylphosphin zugesetzt wird.

In Abänderung zu Vergleichsbeispiel 1, wird in der Mischung aus Beispiel 2 zusätzlich 2 phr, und aus Beispiel 3 zusätzlich 4 phr Triphenylphosphin in der 1. Mischstufe eingemischt.

In Abbildung 1 sind die Drehmomentsverläufe für die Beispiele 1, 2 und 3 bei 165°C in der 2. Mischstufe über die Zeit wiedergegeben, wobei die Zunahme des Drehmoments der Tendenz zur Vorvernetzung bei der angegebenen Temperatur entspricht.

Anhand von Figur 1 erkennt man, daß die Zunahme des Drehmoments bei den erfindungsgemäßen Beispielen 2 und 3 deutlich geringer ist, als bei dem Vergleichsbeispiel 1 gemäß dem Stand der Technik.

Die gummitechnischen Daten für Rohmischung und Vulkanisat sind in Tabelle 4 aufgeführt.

Tabelle 4

| **Rohmischungsergebnisse** | | | | |
|---|---|---|---|---|
| Merkmal: | Einheit: | - 1 - | - 2 - | - 3 - |
| ML(1+4) bei 100°C (3.Stufe) | [ME] | 71 | 71 | 69 |
| Vulkameterprüfung 165°C | | | | |
| Dmax-Dmin | [dNm] | 18.7 | 16.21 | 16.29 |
| t 10% | [min] | 1.41 | 1.49 | 1.41 |
| t 90% | [min] | 27.1 | 24.8 | 19.9 |
| **Vulkanisatergebnisse** | | | | |
| Merkmal: | Einheit: | - 1 - | - 2 - | - 3 - |
| Zugversuch | | | | |
| Zugfestigkeit | [MPa] | 16.1 | 15.5 | 16.6 |
| Spannungswert 100% | [MPa] | 2.4 | 1.9 | 2.1 |
| Spannungswert 300% | [MPa] | 10.9 | 9.3 | 10.4 |
| Spannungswert 300%/100% | [ ] | 4.5 | 4.9 | 5.0 |
| Bruchdehnung | [%] | 380 | 400 | 400 |
| Bruchenergie | [J] | 84.6 | 80.1 | 85.9 |
| Shore-A-Härte | [SH] | 67 | 61 | 60 |
| DIN-Abrieb | [$mm^3$] | 74 | 67 | 58 |
| Viskoelastische Eigenschaften | | | | |
| Komplexer Modul E* (0°C) | [MPa] | 31.2 | 19.5 | 16.3 |
| Komplexer Modul E* (60°C) | [MPa] | 11.8 | 8.8 | 7.8 |
| Verlustfaktor tan δ (0°C) | [-] | 0.348 | 0.415 | 0.406 |
| Verlustfaktor tan δ (60°C) | [-] | 0.108 | 0.102 | 0.098 |
| Dispersion | [-] | 6 | 6 | 6 |

Anhand von Tabelle 4 ist ersichtlich, daß für die Beispiele 2 und 3 ein allgemein ausgewogen gutes gummitechnisches Wertebild erzielt wird. Insbesondere der Spannungswert 300%/100%, welcher eine gesteigerte Kopplungseffektivität des Silans anzeigt, und ein geringerer tan δ (60°C) Wert, der mit einem niedrigem Rollwiderstand korreliert, fallen positiv auf.

## Patentansprüche

1. Kautschukmischungen, enthaltend mindestens ein Organosilanpolysulfan und mindestens ein Reagenz zur Entschwefelung aus den Verbindungsklassen dreiwertiger Phosphorverbindungen.

2. Kautschukmischungen gemäß Anspruch 1,
**dadurch gekennzeichnet,** daß sie das Organosilanpolysulfan in einer Menge von 0,1 bis 15 Gew.-%, bevorzugt 5 bis 10 Gew.-%, bezogen auf die Menge des eingesetzten Füllstoffs, und das Reagenz zur Entschwefelung in einer Menge von 5 bis 80 Gew.-%, bevorzugt 10 bis 40 Gew.-% bezogen auf die Menge des eingesetzten Organosilanpolysulfans,enthält.

3. Kautschukmischungen gemäß Anspruch 1 oder 2,
**dadurch gekennzeichnet,**
daß sie einen Synthesekautschuk und eine Kieselsäure als Füllstoff enthalten.

4. Verfahren zur Herstellung von Kautschukmischungen gemäß den Ansprüchen 1 bis 3,
**dadurch gekennzeichnet,**
daß Kautschuk, mindestens ein Füllstoff, ein Organosilanpolysulfan und ein Reagenz zur Entschwefelung miteinander vermischt werden.

5. Verfahren zur Herstellung von Kautschukmischungen gemäß Anspruch 4, **dadurch gekennzeichnet,**
daß das Organosilanpolysulfan und das Reagenz zur Entschwefelung während eines thermomechanischen Mischschritts in einem Temperaturbereich von 80 bis 200°C zugegeben werden.

6. Formkörper, erhältlich aus einer Kautschukmischung gemäß den Ansprüchen 1 bis 3.

7. Formkörper gemäß Anspruch 6,
**dadurch gekennzeichnet,**
daß es sich um einen Luftreifen handelt.

8. Formkörper gemäß Anspruch 6,
**dadurch gekennzeichnet,**
daß es sich um eine Reifenlauffläche handelt.

9. Verwendung der Kautschukmischungen gemäß der Ansprüche 1 bis 3 zur Herstellung von Formkörpern, insbesondere Luftreifen oder Reifenlaufflächen.

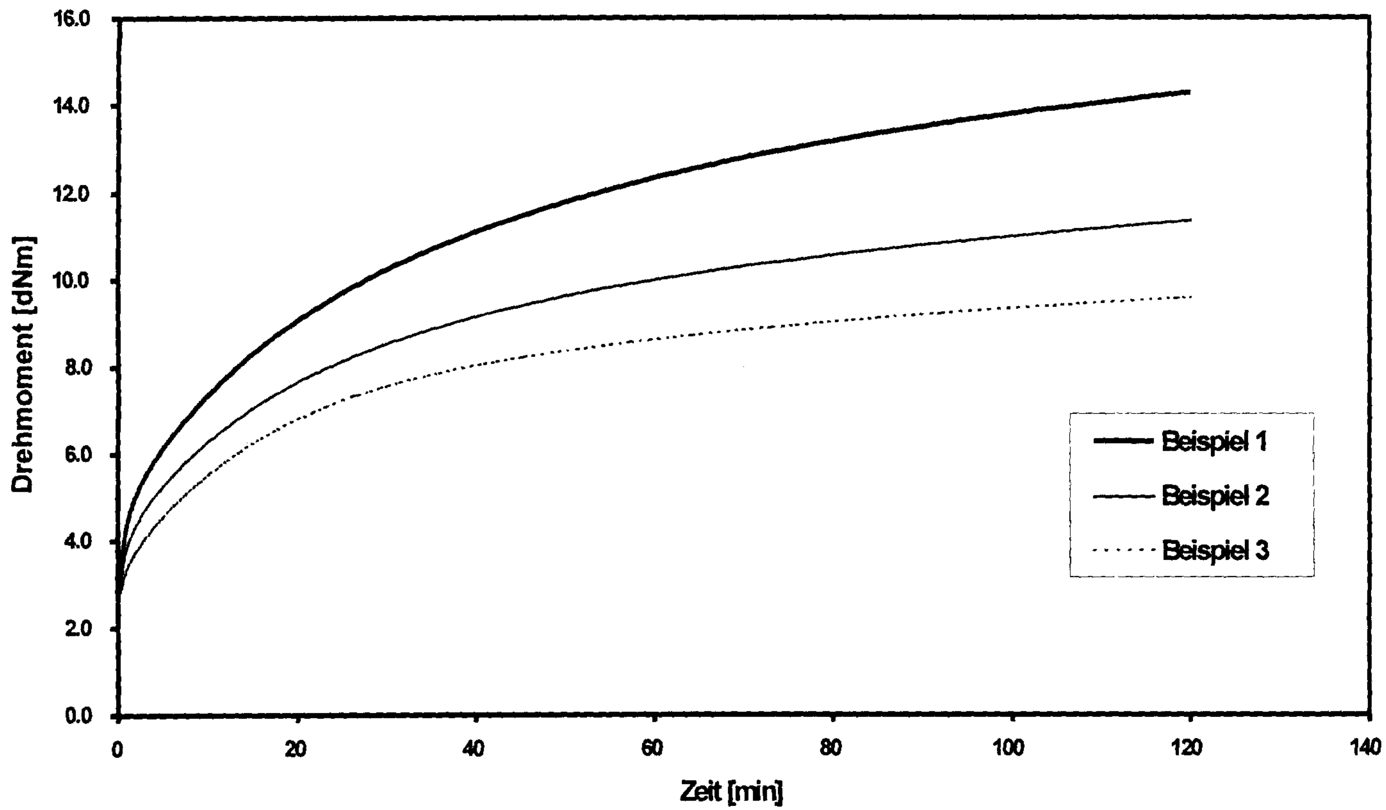


Figur 1: Verlauf des Drehmoments über die Zeit für die Beispiele 1, 2 und 3 bei 165°C in der 2. Mischstufe

Europäisches Patentamt

# EUROPÄISCHER RECHERCHENBERICHT

Nummer der Anmeldung
EP 99 12 4624

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 057 013 A (UNION CARBIDE CORP) 4. August 1982 (1982-08-04) * Seite 2, Zeile 3 - Zeile 24; Ansprüche * --- | 1-9 | C08K5/50 C08K5/524 C08K5/54 C08L21/00 |
| D,A | EP 0 845 472 A (SHINETSU CHEMICAL CO) 3. Juni 1998 (1998-06-03) * Seite 1, Zeile 1 - Zeile 45; Ansprüche * --- | 1-9 | |
| A | EP 0 879 848 A (BRIDGESTONE CORP) 25. November 1998 (1998-11-25) * Ansprüche * ----- | 1-9 | |

| RECHERCHIERTE SACHGEBIETE (Int.Cl.7) |
|---|
| C08K |

Der vorliegende Recherchenbericht wurde für alle Patentansprüche erstellt

| Recherchenort | Abschlußdatum der Recherche | Prüfer |
|---|---|---|
| DEN HAAG | 22. März 2000 | Van Humbeeck, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 99 12 4624

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-03-2000

| Im Recherchenbericht angeführtes Patentdokument | Datum der Veröffentlichung | Mitglied(er) der Patentfamilie | Datum der Veröffentlichung |
|---|---|---|---|
| EP 0057013 A | 04-08-1982 | US 4374943 A | 22-02-1983 |
| | | AU 7983982 A | 05-08-1982 |
| | | CA 1193034 A | 03-09-1985 |
| | | HK 8088 A | 05-02-1988 |
| | | JP 1593560 C | 14-12-1990 |
| | | JP 2016771 B | 18-04-1990 |
| | | JP 57145135 A | 08-09-1982 |
| | | SG 69686 G | 27-02-1987 |
| EP 0845472 A | 03-06-1998 | JP 10158281 A | 16-06-1998 |
| | | US 5817852 A | 06-10-1998 |
| EP 0879848 A | 25-11-1998 | CN 1209826 A | 03-03-1999 |
| | | WO 9748264 A | 24-12-1997 |

EPO FORM P0461

Für nähere Einzelheiten zu diesem Anhang : siehe Amtsblatt des Europäischen Patentamts, Nr.12/82